# EUROPÄISCHE PATENTSCHRIFT

(11) **EP 1 609 711 B1**
(45) Veröffentlichungstag und Bekanntmachung des Hinweises auf die Patenterteilung: **15.08.2007**
(21) Anmeldenummer: 04014444.6
(22) Anmeldetag: 21.06.2004
(51) Int. Cl.: B62K 5/00, B62L 3/08, B60T 7/10, B60T 7/08

(54) **Vierrädriges Fahrzeug**
Four-wheeled motor vehicle
Véhicule à moteur à quatre roues

(43) Veröffentlichungstag der Anmeldung: 28.12.2005
(73) Patentinhaber: Ace Trade AG, 5453 Werfenweng (AT)
(72) Erfinder: Preis, Peter, 5453 Werfenweng (AT)
(74) Vertreter: Torggler, Paul Norbert

(56) Entgegenhaltungen:
- WO-A-03/042026
- FR-A- 2 843 349
- US-B1- 6 478 103

## Beschreibung

Die Erfindung betrifft ein vierrädriges Kraftfahrzeug mit einer motorradähnlichen Sitzbank und einer Lenkeinrichtung, vorzugsweise einer Lenkstange, sowie einem an der Lenkeinrichtung angeordneten Handhebel und einem Fußpedal zum Betätigen einer Bremseinrichtung.

Derartige Kraftfahrzeuge sind allgemein bekannt und können allgemein ganz allgemein in Nutzfahrzeuge, sogenannte All Terrain Vehicles (ATV), und Sportfahrzeuge, auch QUAD genannt, eingeteilt werden. Je nach Verwendungszweck kann das Kraftfahrzeug, das im Grunde genommen als Motorrad mit vier Rädern bezeichnet werden kann, mit Allradantrieb ausgestattet sein. Auch die unterschiedlichsten Anbaugeräte, wie beispielsweise Rasenmäher, Seilwinde, Anhänger und dergleichen sind bereits auf dem Markt erhältlich, sodass diese vierrädrigen Kraftfahrzeuge aufgrund ihrer Geländegängigkeit und den damit verbundenen vielseitigen Einsatzmöglichkeiten immer mehr Verbreitung finden.

Ähnlich wie zweirädrige Motorräder verfügen diese vierrädrigen Kraftfahrzeuge über einen an der Lenkeinrichtung angeordneten Handhebel und über ein Fußpedal zum Betätigen einer Bremseinrichtung, wobei in der Regel ein Betätigungselement - also der Handhebel oder das Fußpedal - auf die Feststellbremse wirkt, während das andere Betätigungselement auf die Betriebsbremse wirkt. Dabei hat es sich vor allem bei der Nutzung derartiger vierrädriger Kraftfahrzeuge als Sportgeräte als vorteilhaft herausgestellt, wenn der Bremszylinder der Betriebsbremse über den Handhebel betätigbar ist, sodass das Betätigen der Betriebsbremse auch dann sichergestellt ist, wenn der Fahrer eine andere als eine sitzende Position einnimmt.

Waren derartige Kraftfahrzeuge anfänglich fast ausschließlich für den Einsatz im Gelände konzipiert, werden mittlerweile von einigen Herstellern gattungsgemäße Kraftfahrzeuge angeboten, die für den Straßenverkehr zugelassen sind. Da bei Verwendung dieser Kraftfahrzeuge im Straßenverkehr der Fahrer in der Regel eine sitzende Position einnimmt, ist es wünschenswert, in diesem Fall die Betriebsbremse in kraftsparender Weise mit dem Fußpedal zu betätigen. Außerdem ist eine fußbetätigte Hauptbremsanlage in Europa Vorschrift.

Ein Kraftfahrzeug entsprechend dem Oberbegriff von Anspruch 1 ist aus der Patentschrift US 6,478,103 B1 bekannt.

Aufgabe der Erfindung ist es daher, ein vierrädriges Kraftfahrzeug der eingangs erwähnten Art zu schaffen, das den unterschiedlichen Anforderungen - je nach Verwendung im Gelände oder im Straßenverkehr - Rechnung trägt, und über eine jederzeit leicht zu betätigende Betriebsbremse verfügt.

Erfindungsgemäß wird dies dadurch erreicht, dass der Handhebel und das Fußpedal entsprechend den Merkmalen von Anspruch 1 gekoppelt sind, sodass die Betriebsbremse sowohl mit dem Handhebel als auch mit dem Fußpedal betätigt werden kann. Abhängig von der Fahrposition kann der Benutzer also beispielsweise im Sitzen mittels des Fußpedales oder im Stehen mittels des Handhebels die Betriebsbremse betätigen.

Das Fußpedal kann dabei eine Doppelfunktion übernehmen, und einerseits mit dem Handhebel gekoppelt als Bedienelement für die beispielsweise hydraulische Betriebsbremse, und andererseits als Betätigungselement für eine vorzugsweise mechanische Feststellbremse, die vorzugsweise auf die Hinterräder wirkt, dienen. Alternativ dazu kann auch ein zusätzliches Bedienelement für die Feststellbremse, beispielsweise in Form eines zusätzlichen Handhebels, vorgesehen sein.

Eine konstruktiv einfache Lösung sieht vor, dass der Handhebel und das Fußpedal mechanisch gekoppelt sind, wobei der Handhebel und das Fußpedal über einen - vorzugsweise vom Fußpedal zum Handhebel führenden - Bowdenzug gekoppelt sind.

Gemäß einem weiteren Ausführungsbeispiel der Erfindung wirken der Handhebel und das Fußpedal auf dieselbe, vorzugsweise hydraulische Bremseinrichtung. Neben diesem bevorzugten Ausführungsbeispiel wäre es jedoch auch denkbar, den Handhebel und das Fußpedal - obwohl sie miteinander gekoppelt sind - auf unterschiedliche Bremseinrichtungen wirken zu lassen. Beispielsweisen könnte das Fußpedal die Hinterräder bremsen, während die mittels des Handhebels betätigbare Bremseinrichtung auf die Vorderräder wirkt.

Da das Fußpedal und der Handhebel über einen vom Fußpedal zum Handhebel führenden Bowdenzug gekoppelt sind, kann man bei einer derartigen Ausführung über das Fußpedal beide Bremseinrichtungen gleichzeitig betätigen, während mit dem Handhebel nur die auf die Vorderräder wirkende Bremseinrichtung betätigbar ist.

Gemäß einem weiterführenden Ausführungsbeispiel der Erfindung ist bei einem vierrädrigen Kraftfahrzeug mit einer motorradähnlichen Sitzbank und einer Lenkeinrichtung, vorzugsweise einer Lenkstange, sowie einem an der Lenkeinrichtung angeordneten Handhebel und/oder einem Fußpedal zum Betätigen einer Bremseinrichtung eine einzige, auf alle vier Räder wirkende Bremseinrichtung vorgesehen.

Weitere Vorteile und Einzelheiten der Erfindung werden im folgenden unter Bezugnahme auf die in der Zeichnung dargestellten Figuren näher erläutert.

Dabei zeigt:
Fig. 1 schematisch eine Seitenansicht eines erfindungsgemäßen Kraftfahrzeuges,
Fig. 2 eine schematische Draufsicht auf die Erfindung, und
Fig. 3a das Funktionsprinzip zweier unterschiedlicher Ausführungsbeispiele der Erfindung.
Fig. 3b ein Ausführungsbeispiele, das zum Verständnis des technischen Hintergrundes beiträgt.

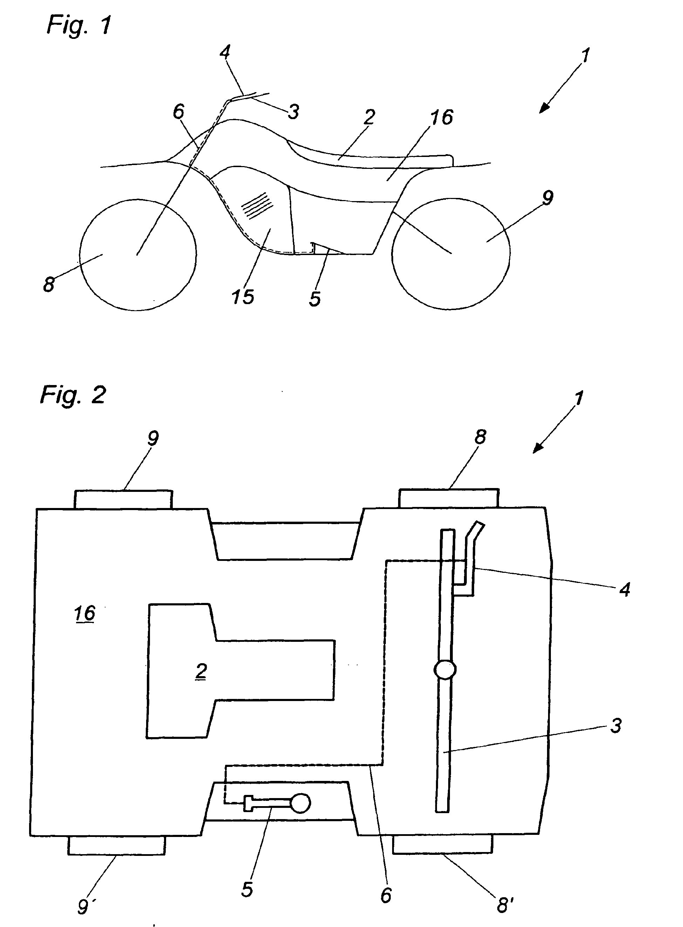

Das in Fig. 1 dargestellte vierrädrige Kraftfahrzeug 1 weist eine auf die Vorderräder 8, 8' wirkende Lenkeinrichtung 3 auf, die wie bei einem zweirädrigen Motorrad als Lenkstange ausgebildet ist. An der Lenkeinrichtung 3 ist ein Handhebel 4 zum Betätigen einer Bremseinrichtung angeordnet. Weiters ist beispielsweise am Trittbrett ein Fußpedal 5 zum Betätigen einer Bremseinrichtung angeordnet. Das Fußpedal 5 und der Handhebel 4 sind mechanisch gekoppelt, beispielsweise über einen Bowdenzug 6 (strichliert). Der Motor 15 ist bei dem gezeigten Ausführungsbeispiel im Frontbereich des Kraftfahrzeuges 1 angeordnet, es wäre aber auch möglich den Motor 15 an anderen geeigneten Stellen vorzusehen. Weiters verfügt das Kraftfahrzeug 1 über ein Chassis 16 und eine motorradähnliche Sitzbank 2.

Bei dem in Fig. 2 gezeigten Ausführungsbeispiel gleicht das Chassis 16 des Kraftfahrzeuges 1 eher dem eines Kleinautos als dem eines zweirädrigen Motorrades. Die übrigen Teile, wie der Handhebel, das Fußpedal oder die Lenkstange, entsprechen den in Fig. 1 gezeigten Teilen, weshalb auf eine nochmalige Beschreibung verzichtet wird.

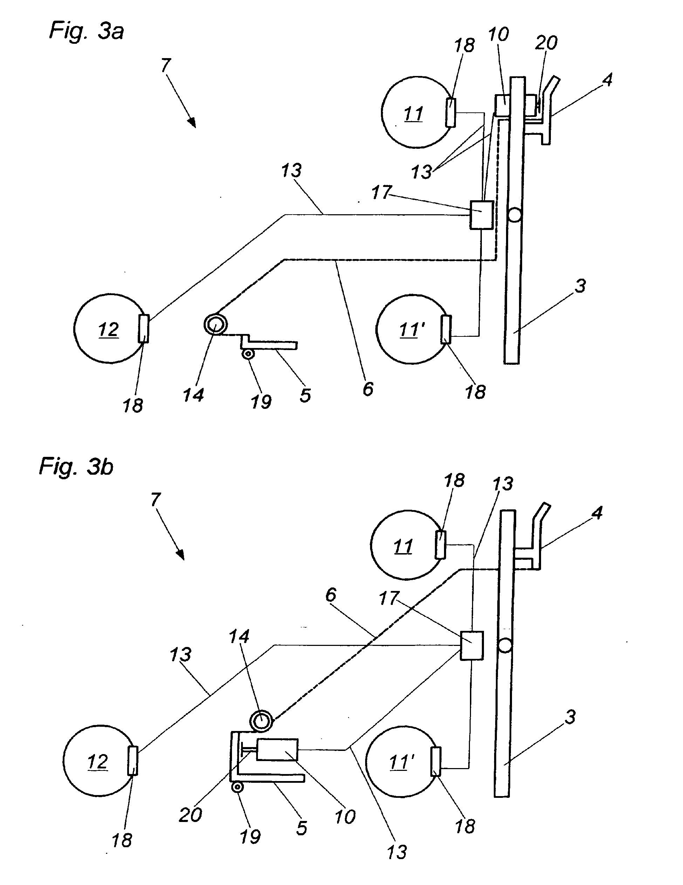

Bei dem in Fig. 3a gezeigten Funktionsschema ist das Fußpedal 5 über einen Bowdenzug 6 mit dem Handhebel 4 mechanisch gekoppelt, wobei der Bowdenzug 6 vom Fußpedal 5 zum Handhebel 4 führt. Das vorzugsweise L-förmige Fußpedal 5 ist im Bereich seines kurzen Schenkels um eine Drehachse 19 drehbar gelagert. Der Bowdenzug 6 greift am Ende des kurzen Schenkels an und führt über wenigstens eine Umlenkrolle 14 zum Handhebel 4. Der Bremszylinder 10 der Bremseinrichtung 7, die die Betriebsbremse darstellt, ist ähnlich wie bei einem Motorrad über den Handhebel 4 betätigbar. In Folge der erfindungsgemäßen Koppelung des Fußpedales 5 mit dem Handhebel 4 ist es möglich, den Bremszylinder 10, der beispielsweise am Lenker (nicht dargestellt) des Kraftfahrzeuges 1 angeordnet sein kann, zu betätigen. Beim gezeigten Ausführungsbeispiel ist die Bremseinrichtung 7 hydraulisch ausgebildet, wobei die Bremsscheiben 11, 11' den Vorderrädern 8, 8' zugeordnet sind, während die Bremsscheibe 12 der Antriebswelle der Hinterräder zugeordnet ist. Beim Betätigen des Handhebels 4 oder des Fußpedals 5 wird der Kolben 20 im Bremszylinder 10, der über eine hydraulische Leitung 13 mit dem Bremskraftverteiler 17 in Verbindung steht, bewegt. Vom Bremskraftverteiler 17 führen weitere hydraulische Leitungen 13 zu den Bremsbakken/-zangen 18, die ihrerseits an den Bremsscheiben 11, 11', 12 angreifen.

Das in Fig. 3b dargestellte Funktionsschema unterscheidet sich von dem in Fig. 3a gezeigten nur dadurch, dass der Bowdenzug 6 vom Handhebel 4 zum Fußpedal 5 führt, wobei der Bremszylinder 10 ebenfalls im Bereich des Fußpedals 5 angeordnet ist. Auf eine Beschreibung der übrigen Teile wird daher verzichtet.

Es sei angeführt, dass sich die Erfindung nicht nur zur Anwendung bei Scheibenbremsen eignet. So wäre neben dem Einsatz von Trommelbremsen auch die Kombination zweier unterschiedlicher Bremssysteme denkbar.

## Patentansprüche

1. Vierrädriges Kraftfahrzeug (1) mit einer motorradähnlichen Sitzbank (2) und einer Lenkeinrichtung (3), vorzugsweise einer Lenkstange, sowie einer Bremseinrichtung (7), die über einen an der Lenkeinrichtung (3) angeordneten Handhebel (4) und/oder ein mit dem Handhebel (4) mechanisch gekoppeltes Fußpedal (5) betätigbar ist, wobei der Handhebel (4) und das Fußpedal (5) über einen Bowdenzug (6) gekoppelt sind, **dadurch gekennzeichnet, dass** der besagter Bowdenzug vom Fußpedal (5) auf den Handhebel (4) wirkt.

2. Vierrädriges Kraftfahrzeug nach Anspruch 1, **dadurch gekennzeichnet, dass** der Handhebel (4) und das Fußpedal (5) auf dieselbe, vorzugsweise hydraulische Bremseinrichtung (7) wirken.

3. Vierrädriges Kraftfahrzeug nach Anspruch 1 oder 2, **dadurch gekennzeichnet, dass** das Fußpedal (5) zusätzlich als Betätigungselement für eine vorzugsweise mechanische Feststellbremse ausgebildet ist.

4. Vierrädriges Kraftfahrzeug mit einer motorradähnlichen Sitzbank und einer Lenkeinrichtung, vorzugsweise einer Lenkstange, sowie einem an der Lenkreinrichtung angeordneten Handhebel und/oder einem Fußpedal zum Betätigen einer Bremseinrichtung nach Anspruch 1 oder 2, **dadurch gekennzeichnet, dass** eine einzige, auf alle vier Räder (8, 8', 9, 9') wirkende Bremseinrichtung (7) vorgesehen ist.

## Claims

1. A four-wheeled motor vehicle (1) comprising a motorcycle-like seat (2) and a steering arrangement (3), preferably a handlebar, and a braking arrangement (7) which is actuatable by way of a hand lever (4) arranged on the steering arrangement (3) and/or a foot pedal (5) mechanically coupled to the hand lever (4), wherein the hand lever (4) and the foot pedal (5) are coupled by way of a bowden cable (6), **characterised in that** said bowden cable acts from the foot pedal (5) on the hand lever (4).

2. A four-wheeled motor vehicle according to claim 1 **characterised in that** the hand lever (4) and the foot pedal (5) act on the same preferably hydraulic braking arrangement (7).

3. A four-wheeled motor vehicle according to claim 1 or claim 2 **characterised in that** the foot pedal (5) is additionally in the form of an actuating element for a preferably mechanical parking brake.

4. A four-wheeled motor vehicle comprising a motorcycle-like seat and a steering arrangement, preferably a handlebar, and a hand lever arranged on the steering arrangement and/or a foot pedal for actuation of a braking arrangement according to claim 1 or claim 2 **characterised in that** there is provided a single braking arrangement (7) acting on all four wheels (8, 8', 9, 9')

## Revendications

1. Véhicule automobile à quatre roues (1) comprenant une banquette (2) du type motocycle et un système de direction (3), de préférence un guidon, ainsi qu'un système de freinage (7) qui peut être actionné par un levier à main (4) disposé sur le système de direction (3) et/ou une pédale (5) couplée mécaniquement au levier à main (4), le levier à main (4) et la pédale (5) étant couplées par un câble Bowden (6), **caractérisé en ce que** ledit câble Bowden agit de la pédale (5) sur le levier à main (4).

2. Véhicule automobile à quatre roues selon la revendication 1, **caractérisé en ce que** le levier à main (4) et la pédale (5) agissent sur le système de freinage (7) de préférence hydraulique.

3. Véhicule automobile à quatre roues selon la revendication 1 ou 2, **caractérisé en ce que** la pédale (5) est conçue en plus comme un élément d'actionnement pour un frein d*'*arrêt de préférence mécanique.

4. Véhicule automobile à quatre roues comprenant une banquette du type motocycle et un système de direction, de préférence un guidon, ainsi qu'un levier à main disposé sur le système de direction et/ou une pédale destinés à actionner un système de freinage selon la revendication 1 ou 2, **caractérisé en ce qu'**il est prévu un seul système de freinage (7) agissant sur l'ensemble des quatre roues (8, 8', 9, 9').
